# EUROPEAN PATENT APPLICATION

(11) **EP 2 728 458 A2**
(43) Date of publication of application: **07.05.2014**
(21) Application number: 13172445.2
(22) Date of filing: 18.06.2013
(51) Int. Cl.: G06F 3/12

(54) **Method of processing XPS document and image forming apparatus to perform the same**

(30) Priority: 02.11.2012 KR 20120123750
(71) Applicant: Samsung Electronics Co., Ltd, Gyeonggi-do 443-742 (KR)
(72) Inventor: Chae, Sung-won, Seoul (KR)
(74) Representative: Waddington, Richard

(57) **Abstract**

A method of processing an extensible markup language (XML) Paper Specification (XPS) document according to the present general inventive concept includes receiving a request to print an XPS document at an image forming apparatus, confirming namespaces declared in a PrintTicket of the XPS document, selecting a namespace of which information for processing is not stored in the image forming apparatus from among the confirmed namespaces, processing an option set for the selected namespace on the basis of a user's input or current setting value and interpreting the PrintTicket and printing the XPS document.

## Description

### CROSS-REFERENCE TO RELATED APPLICATIONS

This application claims the benefit of Korean Patent Application No. 10-2012-0123750, filed on November 2, 2012, in the Korean Intellectual Property Office, the disclosure of which is incorporated herein in its entirety by reference.

### BACKGROUND OF THE INVENTION

### 1. Field of the Inventive concept

The present general inventive concept relates to a method of processing an extensible markup language (XML) Paper Specification (XPS) document and an image forming apparatus to provide the same.

### 2. Description of the Related Art

An extensible markup language (XML) Paper Specification (XPS) document denotes a document for which a template is maintained and which has an electronic file format in a fixed layout which enables file-sharing. This XPS document includes a PrintTicket that provides setting information used in printing. In the PrintTicket, a namespace is declared and print options or the like are set for the declared namespace.

However, most printer manufacturers use a non-standard namespace of their own as well as a commonly used standard namespace.

Therefore, a problem may arise in that a document may be inadvertently printed without a portion of the set options for the non-standard namespace, because a driver that creates the XPS document is incompatible with a printer that prints the same due to the non-standard namespace when the manufacturers of the driver and the printer are not the same.

### SUMMARY OF THE INVENTION

The present general inventive concept provides a method of enhancing compatibility in processing an extensible markup language (XML) Paper Specification (XPS) document in an image forming apparatus.

Additional features and utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

Exemplary embodiments of the present inventive concept provide a method of processing an extensible markup language (XML) Paper Specification (XPS) document, the method including: receiving a request to print the XPS document at an image forming apparatus; confirming namespaces declared in a PrintTicket of the XPS document; selecting a namespace of which information for processing is not stored in the image forming apparatus from among the confirmed namespaces; processing an option set for the selected namespace on the basis of a user's input or current setting value; and interpreting the PrintTicket and printing the XPS document.

The processing of the option may include changing a setting value for the option into a value input from a user.

The processing of an option may include determining a setting value of the option to be similar to the current setting value.

When a word identical to the current setting value of the option is stored as associated information for a namespace uniform resource identifier (URI) processable in the image forming apparatus, the setting value of the option may be determined to be the stored word.

When a word which is identical to the current setting value of the option but different in terms of upper and lower case letters is stored as associated information for a namespace URI processable in the image forming apparatus, the setting value of the option may be determined to be the stored word.

When a portion of words included in the current setting value of the option is identical to a portion of a word stored as associated information for a namespace URI processable in the image forming apparatus, the setting value of the option may be determined to be the stored word.

When the current setting value of the option has a same meaning as a meaning of a word stored as associated information for a namespace URI processable in the image forming apparatus, the setting value of the option may be determined to be the stored word.

The processing of an option may include determining a setting value of the option to be a value preset in the image forming apparatus.

Exemplary embodiments of the present inventive concept also provide a computer-readable recording medium having a computer program recorded thereon for causing a computer to execute a method according to any one of the foregoing methods

Exemplary embodiments of the present inventive concept also provide an image forming apparatus including: a user interface unit to receive a user's input; a communication interface unit to receive an XPS document from outside; a storage unit to store a URI and associated information of a processable namespace; a PrintTicket processing unit to interpret a PrintTicket of the XPS document received through the communication interface unit by using the information stored in the storage unit and determine an option setting value; a controller to control performing of printing according to the determined option setting value; and a printing unit to perform the printing according to the controlling by the controller, wherein the PrintTicket processing unit confirms namespaces declared in the PrintTicket, selects a namespace of which information for processing is not stored in the storage unit, and processes an option set for the selected namespace on the basis of a user's input input through the user interface unit or current setting value.

The PrintTicket processing unit may change a setting value of the option set for the selected namespace into a value input from the user through the user interface unit.

The PrintTicket processing unit may determine a setting value of the option set for the selected namespace to be similar to the current setting value.

When a word identical to the current setting value for the option set for the selected namespace is stored as associated information for the namespace URI stored in the storage unit, the PrintTicket processing unit may determine the setting value of the option set for the selected namespace to be the stored word.

When a word which is identical to the current setting value for the option set for the selected namespaces but is different in terms of upper and lower case letters is stored as associated information for the namespace URI stored in the storage unit, the PrintTicket processing unit may determine the setting value of the option set for the selected namespace to be the stored word.

When a portion of words included in the current setting value for the option set for the selected namespace is identical to a portion of a word stored as associated information for the namespace URI stored in the storage unit, the PrintTicket processing unit may determine the setting value of the option set for the selected namespace to be the stored word.

When the current setting value of the option set for the selected namespace has a same meaning as a meaning of a word stored as associated information on the namespace URI stored in the storage unit, the PrintTicket processing unit may determine the setting value of the option set for the selected namespace to be the stored word.

The PrintTicket processing unit may determine a setting value for the option set for the selected namespace to be a value preset in the image forming apparatus.

According to the features and utilities of the present general inventive concept, compatibility can be enhanced by processing an option set for a namespace of which information for processing is not stored in an image forming apparatus on the basis of a user's input or current option setting value, even though a manufacturer of a driver creating an XPS document and a manufacturer of a printer are not the same.

Exemplary embodiments of the present inventive concept also provide a method of processing an extensible markup language (XML) Paper Specification (XPS) document, the method comprising: receiving a request to print the XPS document at an image forming apparatus; confirming namespaces declared in a PrintTicket of the XPS document; selecting a namespace of which information for processing is not stored in the image forming apparatus from among the confirmed namespaces; processing an option set for the selected namespace on the basis of associated information; and interpreting the PrintTicket and printing the XPS document.

In an exemplary embodiment, the associated information is stored information with different URI namespaces but associated with the declared namespace.

Exemplary embodiments of the present inventive concept also provide an image forming apparatus comprising: a user interface unit to receive a user's input; a communication interface unit to receive an XPS document from outside; a storage unit to store a URI and associated information of a processable namespace; a PrintTicket processing unit to interpret a PrintTicket of the XPS document received through the communication interface unit by using the information stored in the storage unit and to determine an option setting value such that if the information stored does not correspond with a confirmed namespace declared in the PrintTicket, then determining the option setting value for the selected namespace on the basis of associated information; a controller to control performing of printing according to the determined option setting value; and a printing unit to perform the printing according to the control by the controller.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a block diagram illustrating a configuration of an image forming apparatus according to an embodiment of the present general inventive concept;

FIG. 2 illustrates processable namespace uniform resource identifiers (URIs) stored in a storage unit;

FIG. 3 illustrates associated information among elements, namespace URIs and keywords stored in the storage unit;

FIG. 4 illustrates a PrintTicket of an extensible markup language (XML) Paper Specification (XPS) document to be printed;

FIG. 5 illustrates a user interface display to receive an option setting value from a user;

FIGS. 6 to 10 illustrate PrintTickets of XPS documents to be printed;

FIG. 11 illustrates a user interface display to select a way to perform option processing; and

FIGS. 12 to 15 are flowcharts illustrating methods of processing an XPS document according to embodiments of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

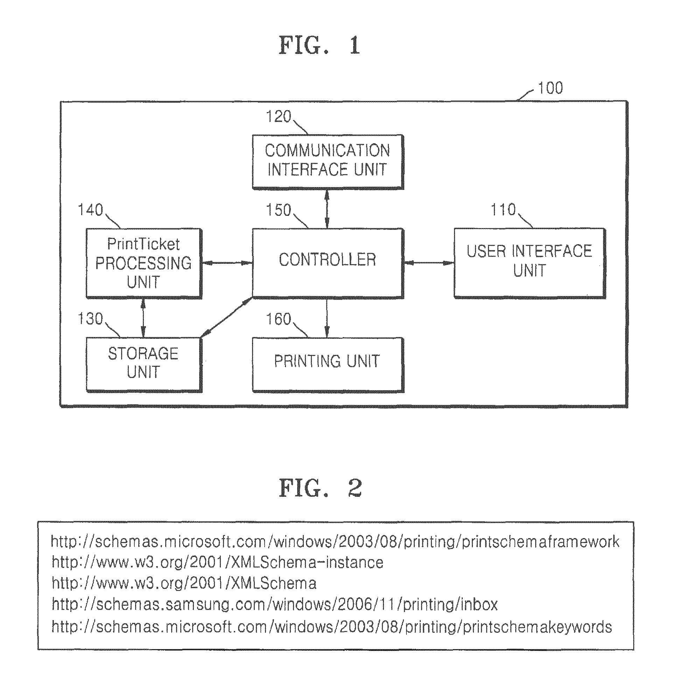

FIG. 1 is a block diagram illustrating a configuration of an image forming apparatus according to an embodiment of the present general inventive concept. Referring to Fig. 1, an image forming apparatus 100 according to an embodiment of the present general inventive concept may include a user interface unit 110, a communication interface unit 120, a storage unit 130, a PrintTicket processing unit 140, a controller 150 and a printing unit 160. The communication interface unit 120 receives an XML Paper Specification (XPS) document from outside and transfers the same to the controller 150. When receiving the XPS document, the controller 150 requests an interpretation for the PrintTicket included in the XPS document for printing. The PrintTicket processing unit 140 interprets the PrintTicket on the basis of information stored in the storage unit 130, a user's input and the like to determine an option value, and transfers the determined option value to the controller 150. The controller 150 controls the printing unit 160 to perform a printing job according to the determined option value.

The user interface unit 110 has a configuration to receive the user's input, and particularly can receive an option setting value set for a namespace which is not processable in the image forming apparatus 100. In addition, the user interface unit 110 may receive a way to perform option processing selected and input by the user for the namespace which is not processable in the image forming apparatus 100.

Here, the namespace which is not processable in the image forming apparatus 100 refers to a namespace using namespace uniform resource identifiers (URIs) which are not stored in the storage unit 130. The storage unit 130 stores the namespace URIs processable in the image forming apparatus 100 and associated information among the elements, namespace URIs and keywords. When the PrintTicket of the XPS document includes namespace URIs that are not stored in the storage unit 130, the corresponding namespace is not processable using the information stored in the storage unit 130.

The namespace URIs includes a non-standard namespace that each manufacturer uses independently as well as a standard namespace that all the manufacturers commonly use. Accordingly compatibility may decrease due to the non-standard namespace, when a manufacturer of the driver creating the XPS document is different from a manufacturer of an image forming apparatus to print the XPS document. Namely, when there is a non-standard namespace among namespaces included in a PrintTicket of an XPS document in the related art and the corresponding namespace URIs are not stored in the storage unit 130, problems may occur that printing is performed with options set for the corresponding namespace neglected and a part of option settings intended by the user are omitted.

The image forming apparatus 100 according to embodiments of the present general inventive concept processes the set options on the basis of the user's input or the current set values for the options, even though the options are set for the namespace URIs which are not stored in the storage unit 130. Therefore compatibility can be enhanced. Hereinafter a way to perform option processing on the basis of the user's input or the current set values for the options will be described in detail with reference to the drawings.

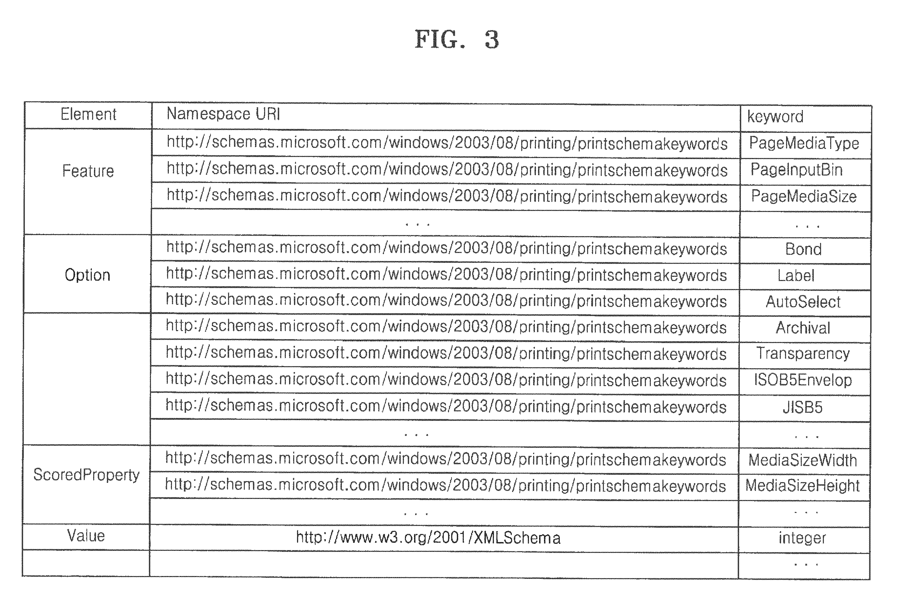

FIG. 2 illustrates processable namespace URIs stored in a storage unit 130, and FIG. 3 illustrates associated information among elements, namespace URIs and keywords stored in the storage unit 130.

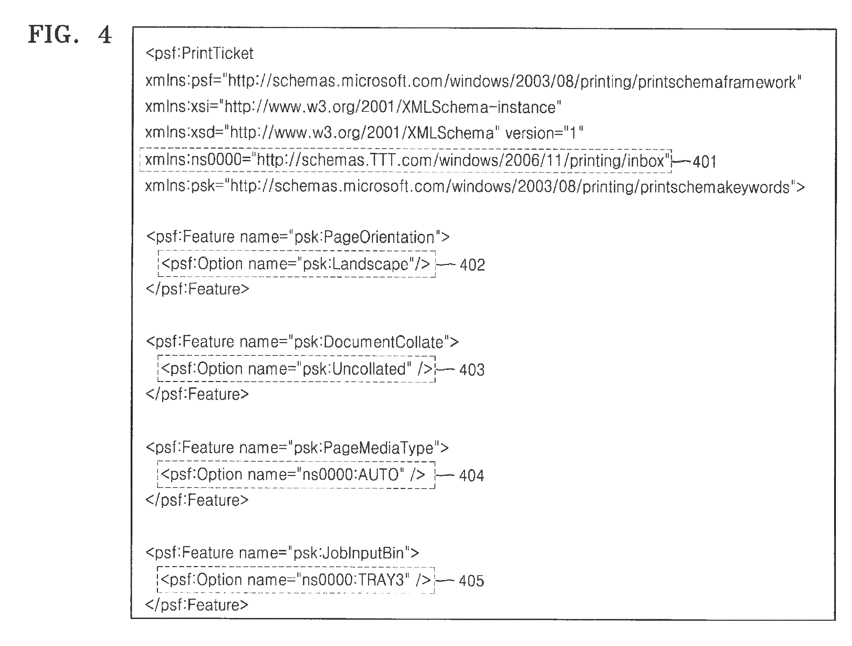

Firstly a way to perform option processing on the basis of the user's input will be described. FIG. 4 illustrates a PrintTicket of an XPS document to be printed. Referring to FIG. 4, a namespace URI of reference numeral 401 does not coincide with a processable namespace URI as shown in FIG. 2. Therefore option setting values for options 404 and 405 using prefix "ns0000" of the corresponding namespace URI, namely, "PageMediaType" and "JobInputBin", are not processable using information stored in the storage unit 130. The PrintTicket processing unit 140 selects namespaces which are not processable in this way and changes option setting values set for the selected namespaces into values input from the user.

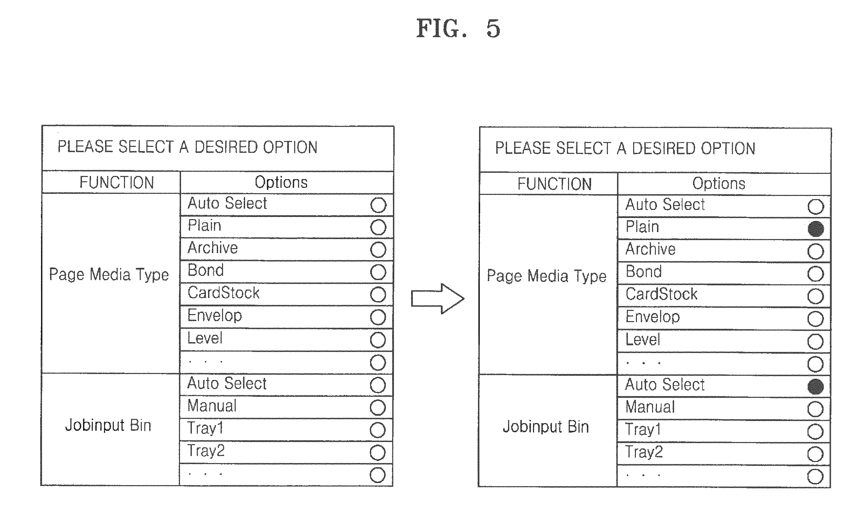

FIG. 5 illustrates a user interface display to receive an option setting value from the user. As shown in FIG. 5, the option setting values for "PageMediaType" and "JobInputBin", may be received directly from the user. As shown in FIG. 5, when the user's input is received, the values set at portions indicated with reference numerals 404 and 405 are changed into values input from the user.

Also a way to perform option processing on the basis of the current setting values of the options will be described. Although a non-standard namespace is a namespace that each manufacturer uses independently, it is common that a PrintTicket is generally configured using a letter string and the letter string represents each option's characteristic. Accordingly there are many cases where letter strings used by the manufacturers are similar to or identical to each other.

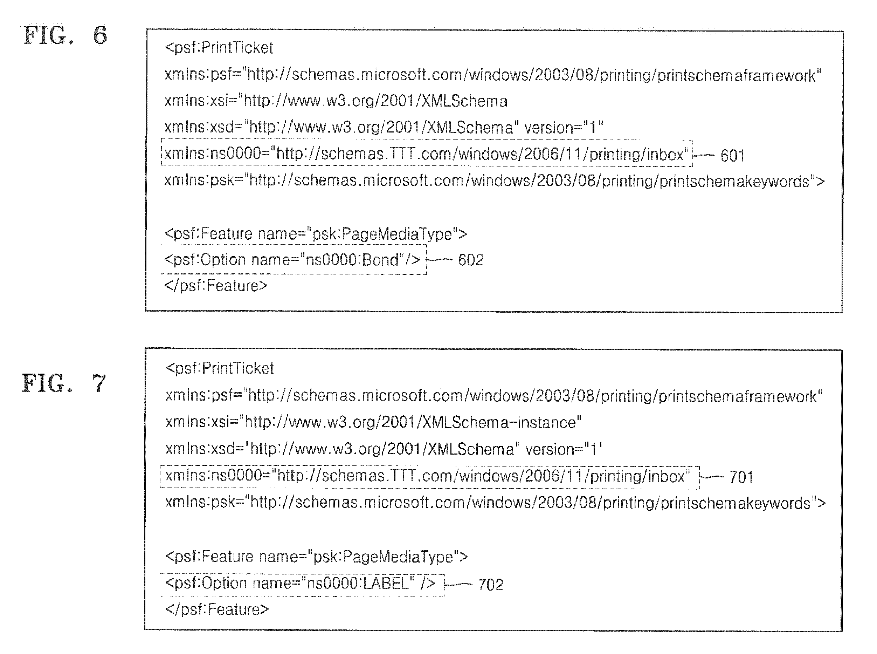

FIGS. 6 to 10 illustrate PrintTickets of XPS documents to be printed.

Referring to FIG. 6, a namespace URI 601 does not coincide with the processable namespace URI as shown in FIG. 2. Accordingly an option setting value for a portion 602 using prefix "ns0000" of the corresponding namespace URI, namely "PageMediaType" is not processable using information stored in the storage unit 130. Referring to FIG. 3, however, it can be seen that "Bond", which is the same word as an option setting value "Bond" for a portion indicated with reference numeral 602 in FIG. 6, is stored as associated information despite different URI namespaces. The PrintTicket processing unit 140 may determine the option setting value of reference numeral 602 to be "Bond", which is stored as the associated information in FIG. 3 and interpret the PrintTicket.

Referring FIG. 7, a namespace URI of reference numeral 701 does not coincide with the processable namespace URI as shown in FIG. 2. Accordingly an option setting value for a portion 702 of using prefix "ns0000" of the corresponding namespace URI, namely "PageMediaType" is not processable using information stored in the storage unit 130. Referring to FIG. 3, however, it can be seen that a word "Label", which is different in terms of upper and lower case letters from an option setting value "Label" for a portion indicated with reference numeral 702 in FIG. 7, is stored as associated information despite different URI namespaces. The PrintTicket processing unit 140 may determine the option setting value of reference numeral 702 to be "Label", which is stored as the associated information in FIG. 7 and interpret the PrintTicket.

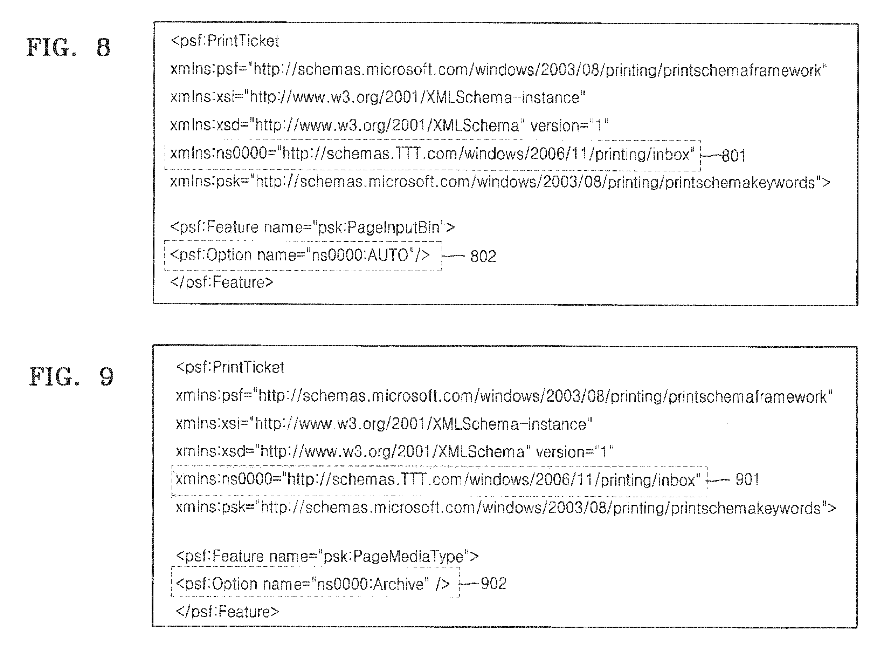

Referring FIG. 8, a namespace URI of reference numeral 801 does not coincide with the processable namespace URI as shown in FIG. 2. Accordingly an option setting value for a portion 802 of using prefix "ns0000" of the corresponding namespace URI, namely "PagelnputBin" is not processable using information stored in the storage unit 130. Referring to FIG. 3, however, it can be seen that a word "AutoSelect," which is partially identical to an option setting value "AUTO" for a portion indicated with reference numeral 802 in FIG. 8, is stored as associated information despite different URI namespaces. The PrintTicket processing unit 140 may determine the option setting value of reference numeral 802 to be "AutoSelect," which is stored as the associated information in FIG. 8 and interpret the PrintTicket.

Referring FIG. 9, a namespace URI of reference numeral 901 does not coincide with the processable namespace URI as shown in FIG. 2. Accordingly an option setting value for a portion 902 of using prefix "ns0000" of the corresponding namespace URI, namely "PageMediaType" is not processable using information stored in the storage unit 130. Referring to FIG. 3, however, it can be seen that a word "Archival," which has the same meaning as an option setting value "Archive" for a portion indicated with reference numeral 902 in FIG. 9, is stored as associated information despite different URI namespaces. The PrintTicket processing unit 140 may determine the option setting value of reference numeral 902 to be "Archival," which is stored as the associated information in FIG. 8 and interpret the PrintTicket.

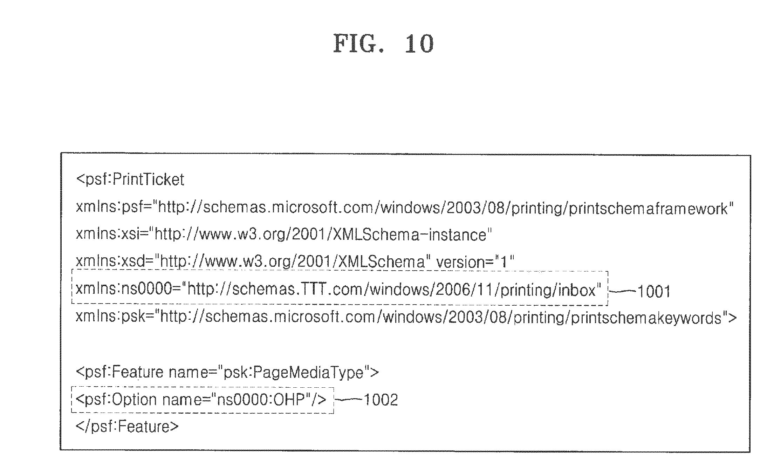

Referring FIG. 10, a namespace URI of reference numeral 1001 does not coincide with the processable namespace URI as shown in FIG. 2. Accordingly an option setting value for a portion 1002 using prefix "ns0000" of the corresponding namespace URI, namely "PageMediaType" is not processable using information stored in the storage unit 130. Referring to FIG. 3, however, it can be seen that a word "Transparency," which indicates a transparent sheet of OHP film indicated by an option setting value "OHP" for a portion indicated with reference numeral 1002 in FIG. 10, is stored as associated information despite different URI namespaces. The PrintTicket processing unit 140 may determine the option setting value of reference numeral 1002 to be "Transparency," which is stored as the associated information in FIG. 10 and interpret the PrintTicket.

On the other hand, the PrintTicket may be interpreted by determining an option set for a namespace of which information for processing in the image forming apparatus is not stored in the PrintTicket of the XPS document to be a preset value in the image forming apparatus. Here the preset value refers to a basic setting value of the image forming apparatus for the corresponding option.

In this way, compatibility may be enhanced by processing the option set for the namespace of which the information for processing is not stored in the image forming apparatus on the basis of the user's input or a current set value of the option.

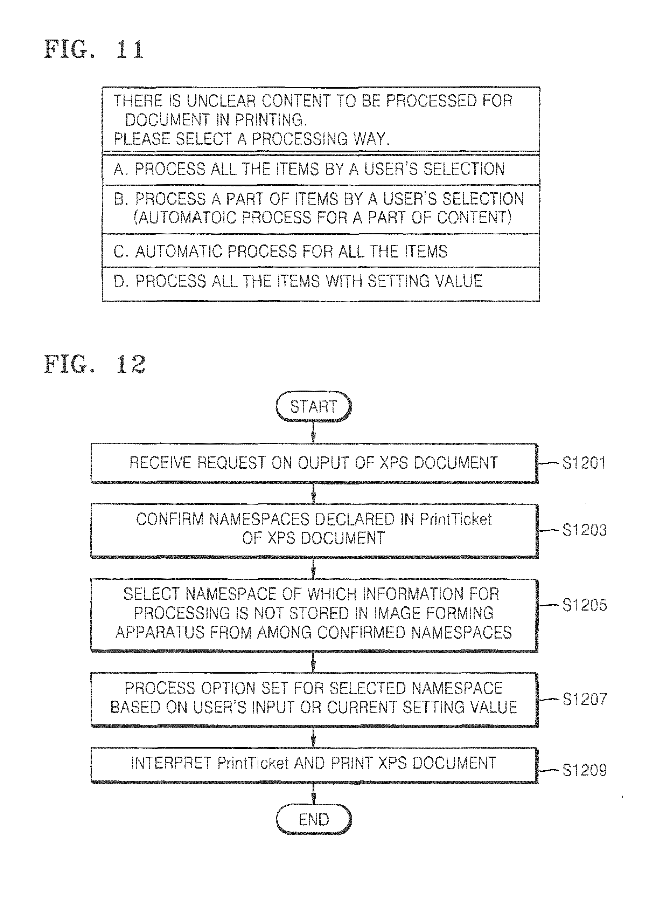

The foregoing ways to perform option processing may be combined properly to be used and the user can select a way to perform option processing through the user interface unit 110. For example, the user can select an option processing way by selecting any one of A to D items on a display on which a screen as shown in FIG. 11 is displayed.

When "A. process all the items by a user's selection" is selected, setting values are received from the user for all the options set for namespace URIs which are not stored in the storage unit 130 and the PrintTicket is interpreted on the basis of the input setting values.

When "B. process a part of items by a user's selection" is selected, setting values are received from the user for some of the options set for namespace URIs which are not stored in the storage 130, and the rest of the options are processed on the basis of the current option setting values.

When "C. automatic process for all the items" is selected, all the options set for the namespace URIs which are not stored in the storage unit 130 are determined and processed on the basis of the current setting values.

When "D. process all the items with setting values" is selected, all the options set for the namespace URIs which are not stored in the storage unit 130 are determined and processed with preset setting values.

These ways of processing are properly adjusted according to circumstances so that the PrintTicket can be interpreted by processing the options set for the non-standard namespaces efficiently.

FIGS. 12 to 15 are flowcharts illustrating methods of processing an XPS document according to embodiments of the present general inventive concept.

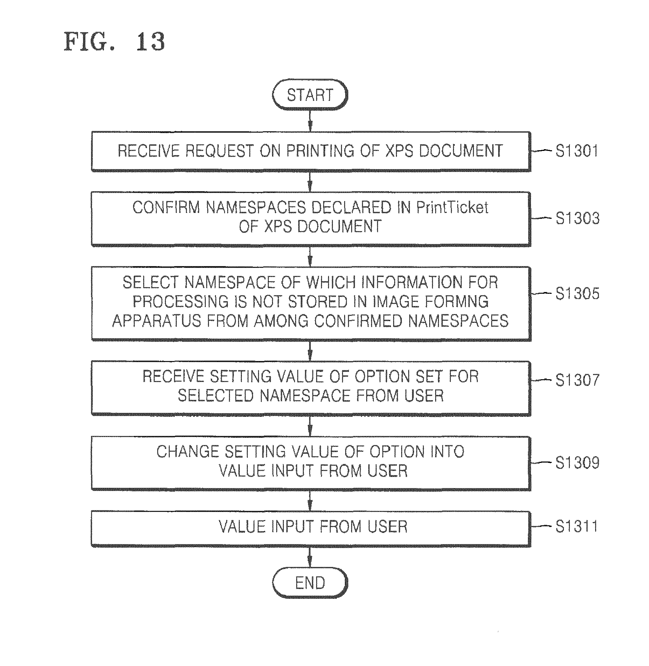

Referring to FIG. 12, when a request for printing an XPS document is received in operation S1201, namespaces declared in a PrintTicket of the XPS document are confirmed in operation S1203. A namespace of which information for processing is not stored in an image forming apparatus is selected from among the confirmed namespaces in operation S1205. When the selection of the namespace is complete, an option set for the selected namespace is processed on the basis of a user's input or current setting value in operation S1207. Detailed ways for performing operation S1207 will be described hereinafter by referring to FIGS. 13 to 15. When the processing for the option is complete, the PrintTicket is interpreted and the XPS document is printed.

FIG. 13 is a flowchart illustrating an embodiment for processing an option based on the input by the user. Since operations S1301 to S1305 and S1311 in FIG. 13 are identical to operations S1201 to S1205 and S1209 in FIG. 12, a detailed description of these processes will be omitted. In operation S1307, an option setting value set for the selected namespace is input by the user. Then the option setting value is replaced with the value input by the user in operation S1309. Detailed ways of performing operations S1307 to S1309 are described above in relation to FIGS. 4 and 5, so a detailed description for the same will be omitted here.

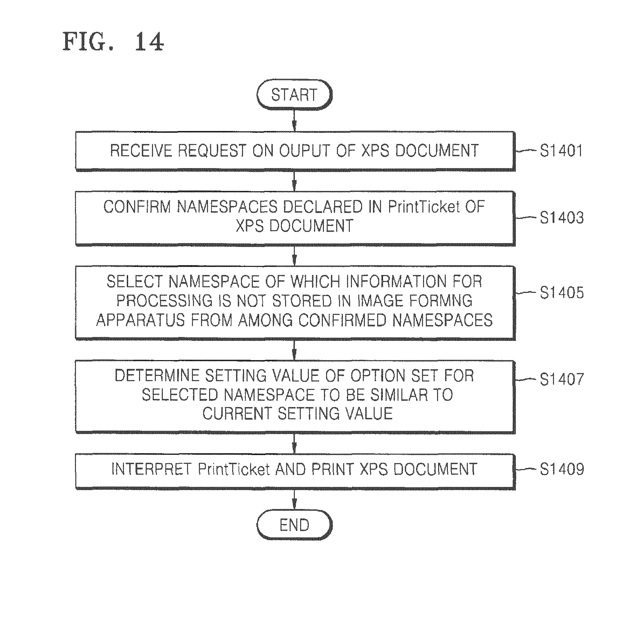

FIG. 14 is a flowchart illustrating an embodiment for processing options based on the current setting values for the option. Since operations S1401 to S1405 and S1409 in FIG. 14 are identical to operations S1201 to S1205 and S1209 in FIG. 12, a detailed description of these processes will be omitted. In operation S1407, an option setting value set for the selected namespace is determined to be similar to the current setting value.

Specifically, when a word identical to the current option setting value is stored as associated information for a namespace URI which is processable in the image forming apparatus, the option setting value is determined to be the stored word. Alternatively, when a word, which is identical to the current option setting value but different in terms of upper and lower case letters, is stored as associated information for a namespace URI which is processable in the image forming apparatus, the option setting value is determined to be the stored word. When a portion of words included in the current option setting value is identical to a portion of a word which is stored as associated information for a namespace URI which is processable in the image forming apparatus, the option setting value is determined to be the stored word. When the current option setting value has the same meaning as a word stored as associated information for a namespace URI which is processable in the image forming apparatus, the option setting value is determined to be the stored word.

A detailed description of ways and examples for determining whether the option setting values are similar to the current setting values has been given above are described in detail in relation to FIGS. 6 to 10, and so will be omitted here.

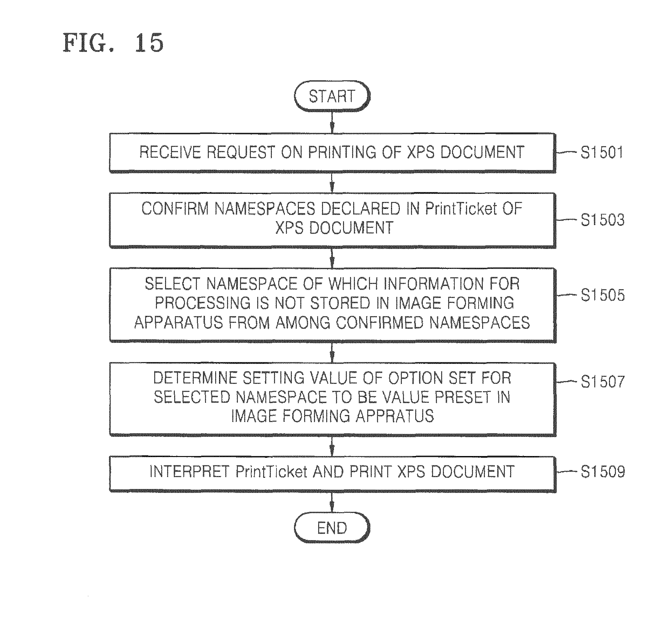

FIG. 15 is a flowchart illustrating an embodiment for determining the option setting values to be preset setting values. Since operations S1501 to S1505 and S1509 in FIG. 15 are identical to operations S1201 to S1205 and S1209 respectively, the detailed description thereof will be omitted. In operation S1507, an option setting value set for the selected namespace is determined to be a preset value in the image forming apparatus.

In this way, XPS document compatibility can be enhanced by processing an option set for a namespace of which information for processing, which is not stored in the image forming apparatus, is processed based on the user's input or the current option setting value.

In addition to the above described embodiments, embodiments of the present invention may also be implemented through computer readable code/instructions in/on a medium, e.g., a computer readable medium, to control at least one processing element to implement any of the above described embodiments. The medium may correspond to any medium/media permitting the storing and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), for example. The media may also be a distributed network, so that the computer readable code is stored/transferred and executed in a distributed fashion. Still further, as only an example, the processing element could include a processor or a computer processor, and processing elements may be distributed and/or included in a single device.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of processing an extensible markup language (XML) Paper Specification (XPS) document, the method comprising:
receiving a request to print the XPS document at an image forming apparatus;
confirming namespaces declared in a PrintTicket of the XPS document;
selecting a namespace of which information for processing is not stored in the image forming apparatus from among the confirmed namespaces;
processing an option set for the selected namespace on the basis of a user's input or current setting value; and
interpreting the PrintTicket and printing the XPS document.

2. The method according to claim 1, wherein the processing of the option comprises changing a setting value for the option into a value input from a user.

3. The method according to claim 1, wherein the processing of an option comprises determining a setting value of the option to be similar to the current setting value.

4. The method according to claim 3, wherein when a word identical to the current setting value of the option is stored as associated information for a namespace Uniform Resource Identifier (URI) processable in the image forming apparatus, the setting value of the option is determined to be the stored word.

5. The method according to claim 3, wherein when a word, which is identical to the current setting value of the option but different in terms of upper and lower case letters, is stored as associated information for a namespace uniform resource identifier (URI) processable in the image forming apparatus, the setting value of the option is determined to be the stored word.

6. The method according to claim 3, wherein when a portion of words included in the current setting value of the option is identical to a portion of a word stored as associated information for a namespace URI processable in the image forming apparatus, the setting value of the option is determined to be the stored word.

7. The method according to claim 3, wherein, when the current setting value of the option has a same meaning as a meaning of a word stored as associated information for a namespace URI processable in the image forming apparatus, the setting value of the option is determined to be the stored word.

8. The method according to claim 1, wherein the processing of an option comprises determining a setting value of the option to be a value preset in the image forming apparatus.

9. A computer-readable recording medium having a computer program recorded thereon for causing a computer to execute a method according to any of claims 1 through 8.

10. An image forming apparatus comprising:
a user interface unit to receive a user's input;
a communication interface unit to receive an XPS document from outside;
a storage unit to store a URI and associated information of a processable namespace;
a PrintTicket processing unit to interpret a PrintTicket of the XPS document received through the communication interface unit by using the information stored in the storage unit and to determine an option setting value;
a controller to control performing of printing according to the determined option setting value; and
a printing unit to perform the printing according to the control by the controller,
wherein the PrintTicket processing unit confirms namespaces declared in the PrintTicket, selects a namespace of which information for processing is not stored in the storage unit, and processes an option set for the selected namespace on the basis of a user's input through the user interface unit or current setting value.

11. The apparatus according to claim 10, wherein the PrintTicket processing unit changes a setting value of the option set for the selected namespace into a value input from the user through the user interface unit.

12. The apparatus according to claim 10, wherein the PrintTicket processing unit determines the option set for the selected namespace to be similar to the current setting value.

13. The apparatus according to claim 12, wherein, when a word identical to the current setting value of the option set for the selected namespace is stored as associated information for the namespace URI stored in the storage unit, the PrintTicket processing unit determines the setting value of the option set for the selected namespace to be the stored word.

14. The apparatus according to claim 12, wherein, when a word, which is identical to the current setting value for the option set for the selected namespace but is different in terms of upper and lower case letters, is stored as associated information for the namespace URI stored in the storage unit, the PrintTicket processing unit determines the setting value of the option set for the selected namespace to be the stored word.

15. The apparatus according to claim 12, wherein, when a portion of words included in the current setting value of the option set for the selected namespace is identical to a portion of a word stored as associated information for the namespace URI stored in the storage unit, the PrintTicket processing unit determines the setting value of the option set for the selected namespace to be the stored word.
